# EUROPEAN PATENT APPLICATION

(11) **EP 4 790 732 A1**
(43) Date of publication of application: **12.08.2026**
(21) Application number: 26156733.3
(22) Date of filing: 05.02.2026
(51) Int. Cl.: H01F 27/06, H01F 38/28, H02G 5/08

(54) **BUSWAY PLUG-IN DEVICE**

(30) Priority: 11.02.2025 TW 114105006
(71) Applicant: Taiwan Busway Co., Ltd., Taoyuan City 338 (TW)
(72) Inventor: CHEN, Min-Li, Taoyuan City 338 (TW)
(74) Representative: Botti & Ferrari S.p.A.

(57) **Abstract**

A busway plug-in device (10), comprising: a housing (11); a busway connection port (12) disposed on the housing (11), wherein the busway connection port (12) connects the housing (11) to a busway and receives power supply; a switch (13) disposed in the housing (11); and a first connection line (14) coupled to the busway connection port (12) and a power receiving side of the switch (13), wherein the first connection line (14) has a mutual inductance section (141) extending outside the housing (11).

## Description

### CROSS-REFERENCE TO RELATED APPLICATION

This application claims the priority benefit of Taiwan application serial no. 114105006 filed on February 11, 2025. The entirety of the above-mentioned patent applications is hereby incorporated by reference herein and made a part of this specification.

### Field

The present invention relates to a busway plug-in device, and more particularly to an application of a latch-type current transformer in a busway switch box.

### Background

In a busway plug-in device (PIU), a current transformer (CT) is often used to measure the current flowing through the busway. However, the current transformer cannot be installed when the busway plug-in device is in a live state. In order to install the current transformer, an additional external current transformer device is required, and the busway plug-in device must have a relatively large internal space to accommodate the installation of the current transformer.

### SUMMARY

Accordingly, the present invention provides a busway plug-in device which is capable of effectively overcoming the problems encountered in the prior art.

More specifically, one of the objectives of the present invention is to provide a busway plug-in device for use with a latch-type current transformer.

One objective of the present invention is to enable a busway plug-in device to be installed with a current transformer even when in a live state.

One objective of the present invention is to allow personnel to quickly and safely install a current transformer on a busway plug-in device.

According to one preferred embodiment, a busway plug-in device is provided, comprising a housing; a busway connection port disposed on the housing, wherein the busway connection port connects the housing to a busway and receive power supply; a switch disposed in the housing; and a first connection line coupled to the busway connection port and a power receiving side of the switch, wherein the first connection line has a mutual inductance section extending outside the housing.

In one embodiment, the outermost layer of the mutual inductance section includes an insulating structure.

In one embodiment, the insulating structure includes a plurality of microstructures.

In one embodiment, each of the plurality of microstructures is in arc-shaped.

In one embodiment, the mutual inductance section connects a current transformer (CT).

In one embodiment, the mutual inductance section includes an auxiliary latch compatible with a latch structure of the current transformer.

In one embodiment, the present invention further comprises: a plurality of connection lines connected to the busway connection port and the power receiving side of the switch, wherein each of the plurality of connection lines include a mutual inductance section extending outside the housing, and the plurality of connection lines and the first connection line may have the same or different structures.

Compared with prior art, the busway plug-in device of the present invention is provided with a mutual inductance section, and further includes an insulating structure formed on the outermost layer of the mutual inductance section. By means of this configuration, the busway plug-in device allows a current transformer to be installed even when in a live state, thereby enabling personnel to quickly and safely install the current transformer on the busway plug-in device without interruption of the power system.

### BRIEF DESCRIPTION OF THE DRAWINGS

The drawings disclosed in the present invention are provided to assist in illustrating various embodiments of the invention. However, for the purpose of simplifying the drawings and/or highlighting the contents to be presented, conventional structures and/or components may be illustrated in a simplified schematic manner or omitted. On the other hand, the number of components shown in the drawings may be singular or plural. The drawings presented in the present invention are intended for the purpose of illustrating these embodiments and are not to be construed as limiting thereto.
FIG. 1 is a schematic view of a busway plug-in device according to one embodiment of the present invention.
FIG. 2 is a schematic view of an internal structure of the busway plug-in device according to one embodiment of the present invention.
FIG. 3A is a side view of the busway plug-in device according to one embodiment of the present invention.
FIG. 3B is a partially enlarged side view of the busway plug-in device according to one embodiment of the present invention.
FIG. 4 is a rear view of the busway plug-in device according to one embodiment of the present invention.

### DETAILED DESCRIPTION

Any reference in the present disclosure to elements designated by terms such as "first," "second," and the like generally does not limit the number or order of such elements. Instead, these terms are used herein merely as a convenient way to distinguish between two or more elements or instances of an element. Accordingly, it should be understood that the use of terms such as "first," "second," and the like in the claims does not necessarily correspond to the same terms as used in the written description. Furthermore, it should be understood that the reference to first and second elements does not imply that only two elements may be employed or that the first element must precede the second element. As used herein, terms such as "comprising," "including," "having," and "containing" are intended to be open-ended terminology, meaning that they specify the presence of the stated features but do not preclude the presence of additional features.

In the present invention, the terms "exemplary" and "for example" are used to mean "serving as an example, instance, or illustration." Any implementation or aspect described herein as "exemplary" or "for example" is not necessarily to be construed as preferred or advantageous over other aspects of the invention. As used herein with respect to specified values or characteristics, the terms "about" and "approximately" are intended to indicate within a certain numerical range (e.g., 10%) of the specified value or characteristic.

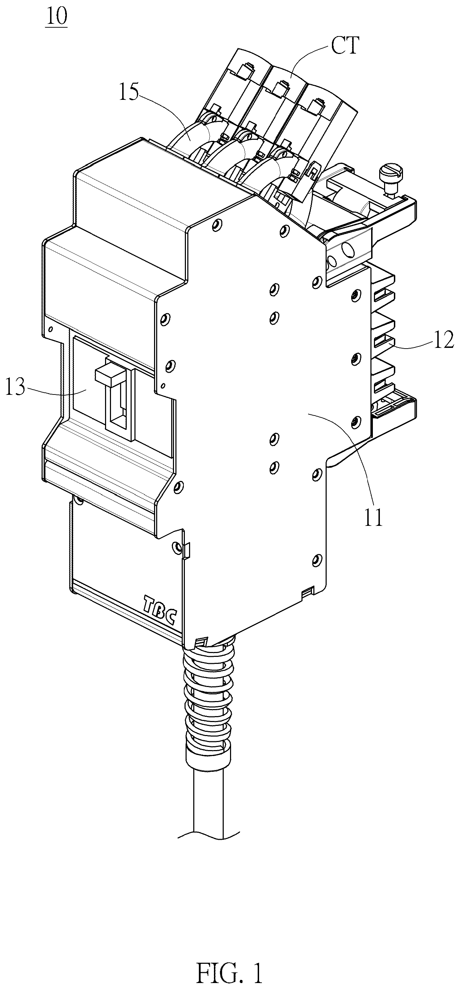

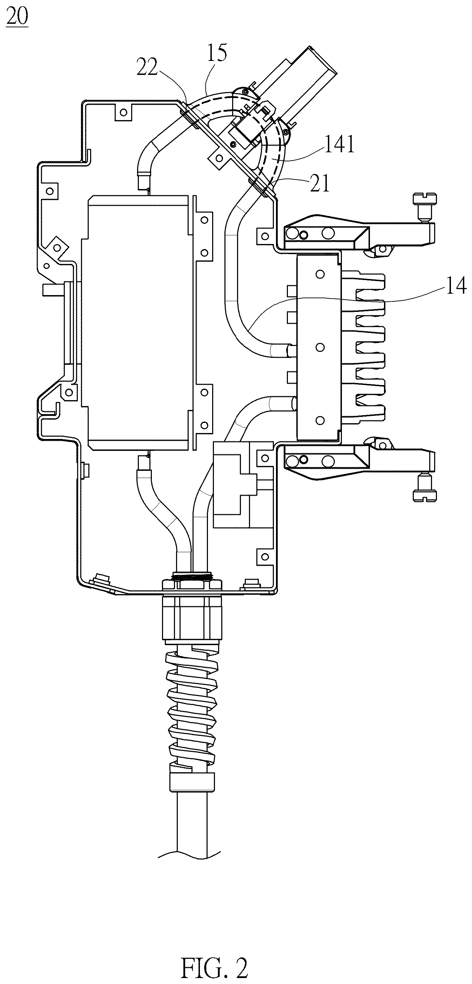

FIG. 1 is a schematic view of a busway plug-in device according to one embodiment of the present invention. FIG. 2 is a schematic view of an internal structure of the busway plug-in device according to one embodiment of the present invention. As shown in FIG. 1, a busway plug-in device 10 includes a housing 11, a busway connection port 12, and a switch 13. The busway connection port 12 is provided on the housing 11 and connects to a busway (not shown) to receives power supply. The power supplied by the busway is controlled through the switch 13 disposed inside the housing 11. Referring to FIG. 2, a first connection line 14 is disposed inside the busway plug-in device 10 and is coupled to the busway connection port 12 and a power receiving side of the switch 13, wherein the first connection line 14 includes a mutual inductance section 141 extending outside the housing 11. When a current transformer (CT) is to be added for measuring the current flowing through the busway plug-in device 10, the CT is installed on the mutual inductance section 141 extending outside the housing 11. The outermost layer of the mutual inductance section 141 is configured as an insulating structure 15 to ensure that, when the CT is installed, the current inside the busway plug-in device 10 will not be exposed to or contacted by the installation personnel at the mutual inductance section 141. Thus, the mutual inductance section 141 with the insulating structure 15 allows the CT to be installed on the busway plug-in device 10 even when the device is in a live state (i.e., without shutting off the busway power supply or disconnecting the switch 13). Accordingly, the installation personnel is able to quickly and safely install the CT on the busway plug-in device 10 without the need to cut off the field power supply, thereby avoiding downtime and losses caused by power shutdown during installation and restart.

The material of the housing 11 may be plastic, resin, or metal (for example, aluminum) or other materials that can be cast or injection molded. The insulating structure 15 on the mutual inductance section 141 may be integrally formed with the housing 11 or manufactured as a separate component through a process such as 3D printing and then mounted on the housing 11. An insulating structure fabricated by 3D printing can be rapidly designed and matched with a corresponding current transformer (CT). In this manner, the installation of the CT is not limited by its structural configuration, and an appropriate insulating structure corresponding to the CT installation configuration can be produced without changing the mold or manufacturing process of the housing 11.

The busway referred to in the present invention is not limited to any particular type. The busway may be an armored busway, a cast-resin busway, or any other busway used in factories for power supply. The busway plug-in device is connected to the busway through the busway connection port 12 that matches the busway, and obtains electric power from the busway to supply a power-demanding device (for example, factory equipment or machinery) at the secondary side of the switch 13.

The mutual inductance section 141 is a portion of the first connection line 14 extending out of the housing 11. Specifically, the switch 13 and the busway connection port 12 are coupled to each other through the first connection line 14. The first connection line 14 extends out of the housing 11 through a first opening 21 and re-enters the housing through a second opening 22. The mutual inductance section 141 is disposed between the first opening 21 and the second opening 22. The insulating structure 15 may be fabricated using the aforementioned manufacturing methods, and the two ends of the insulating structure 15 are fixed to the first opening 21 and the second opening 22, respectively. In this manner, the first connection line 14 has a mutual inductance section 141 extending outside the housing 11.

Through the mutual inductance section with the insulating structure, the busway plug-in device of the present invention allows a current transformer (CT) to be installed while the busway is continuously powered or the switch is not disconnected (i.e., under a live state). This reduces the risk of electric shock faced by installation personnel, and enables the CT to be quickly and safely installed on the busway plug-in device without interrupting the power operation of the factory.

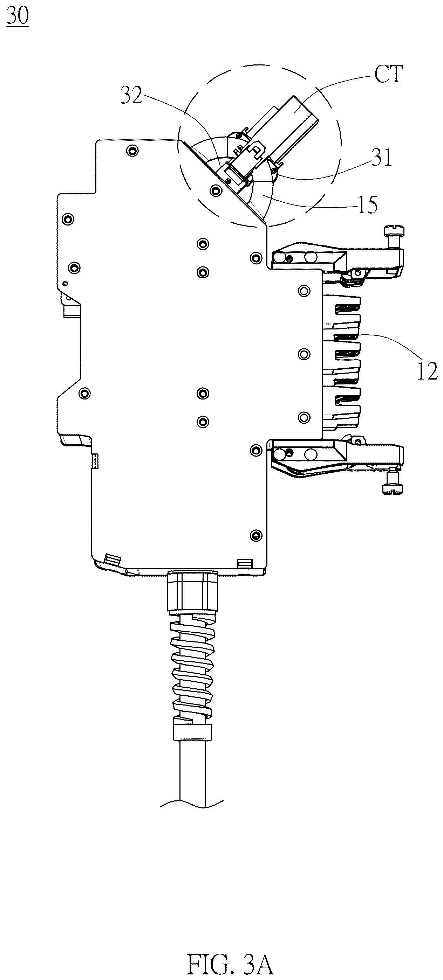

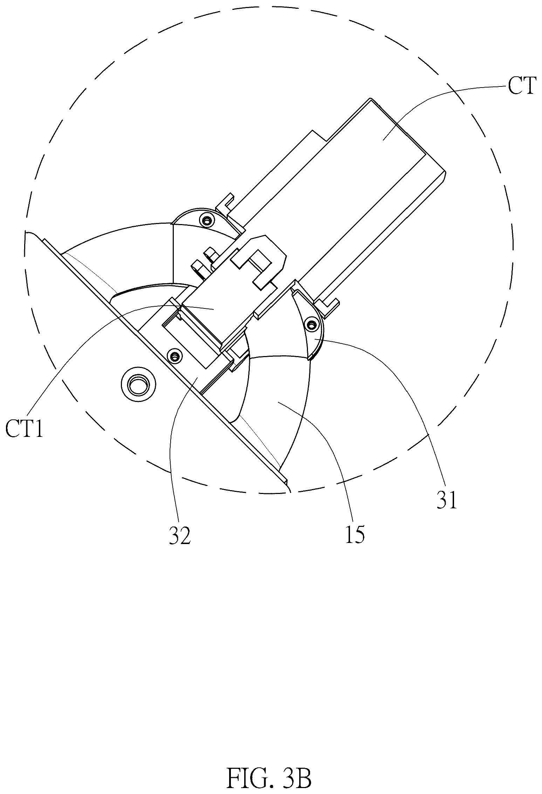

In one embodiment, the insulating structure of the mutual inductance section 141 may include a microstructure 31, thereby improving the stability of engagement with the current transformer (CT) and facilitating installation. Specifically, referring to FIGS. 3A-3B, FIG. 3A illustrates a side view of a busway plug-in device according to one embodiment of the present invention, and FIG. 3B illustrates a partially enlarged side view thereof. As shown in FIGS. 3A and 3B, at least one microstructure 31 is provided on the insulating structure 15 of the mutual inductance section 141 of the busway plug-in device 30, and the microstructure 31 matches and engages with an installation portion CT1 of the CT. In one example of the present embodiment, the microstructure 31 may be in arc-shaped, as illustrated in FIGS. 3A and 3B. The arc-shaped microstructure 31 can provide supporting force when installing the CT, significantly enhancing the stress resistance of the insulating structure material. Accordingly, when the CT is installed onto the insulating structure 15 of the mutual inductance section 141, the CT can be more tightly fitted to the insulating structure 15 of the mutual inductance section 141. It should be noted that FIGS. 3A and 3B illustrate only one example of the present embodiment and are not intended to limit the shape of the microstructure 31. In another example of the present embodiment, the microstructure 31 on the mutual inductance section 141 may also include an auxiliary latch 32 that matches a latch structure of the CT, or a polygonal structure. In this example, the auxiliary latch 32 may enable the CT to be better secured to the mutual inductance section 141 during installation, and the matching latch structure and auxiliary latch 32 may provide fool-proofing or installation completion indication, ensuring that current measurement by the CT is not affected by installation errors. It should be understood that the microstructure 31 is not limited to the above examples.

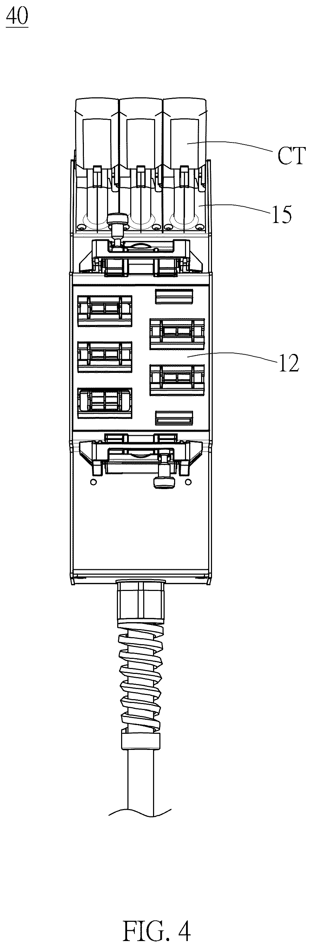

FIG. 4 illustrates a rear view of a busway plug-in device according to one embodiment of the present invention. As shown in FIG. 4, in the busway plug-in device 40, the mutual inductance section 141 is configured to secure the current transformer (CT). The busway connection port 12 may be adapted to various busway structures. Accordingly, the busway plug-in device 40 of the present invention, while maintaining the function of a conventional busway plug-in device, further incorporates the mutual inductance section 141 to accommodate the CT. Thus, the busway plug-in device 40 allows the CT to be installed even under a live state, enabling personnel to quickly and safely install the CT onto the busway plug-in device 40 without interrupting the power system.

According to the above embodiments, the busway plug-in device of the present invention is provided with a mutual inductance section, and further includes an insulating structure formed on the outermost layer of the mutual inductance section. By means of this configuration, the busway plug-in device allows a current transformer to be installed even when in a live state, thereby enabling personnel to quickly and safely install the current transformer on the busway plug-in device without interruption of the power system.

The foregoing description of the present invention is provided to enable those skilled in the art to make and use the invention. Various modifications to the present invention will be apparent to those skilled in the art, and the general principles defined herein may be applied to other variations without departing from the spirit or scope of the present invention. Furthermore, the general principles may be combined or implemented separately among different embodiments. Therefore, the present invention is not intended to be limited to the examples described herein, but is to be accorded the broadest scope consistent with the principles and novel features of the invention.

## Claims

1. A busway plug-in device (10), comprising:
a housing (11);
a busway connection port (12) disposed on the housing (11), wherein the busway connection port (12) connects to a busway and receives a power supply;
a switch (13) disposed in the housing (11); and
a first connection line (14) coupled to the busway connection port (12) and a power receiving side of the switch (13), wherein the first connection line (14) has a mutual inductance section (141) extending outside the housing (11).

2. The busway plug-in device (10) of claim 1, wherein an outermost layer of the mutual inductance section (141) includes an insulating structure (15).

3. The busway plug-in device (10) of claim 2, wherein the insulating structure (15) includes a plurality of microstructures (31).

4. The busway plug-in device (10) of claim 3, wherein each of the plurality of microstructures (31) is in arc-shape.

5. The busway plug-in device (10) of claim 1, wherein the mutual inductance section (141) connects a current transformer (CT).

6. The busway plug-in device (10) of claim 5, wherein the mutual inductance section (141) includes an auxiliary latch (32) compatible with a latch structure of the current transformer (CT).

7. The busway plug-in device (10) of claim 1, further comprising:
a plurality of connection lines connected to the busway connection port (12) and the power receiving side of the switch (13); wherein each of the plurality of connection lines include a mutual inductance section (141) extending outside the housing (11), and the plurality of connection lines and the first connection line (14) may have the same or different structures.

8. A busway plug-in device (10), comprising:
a housing (11);
a busway connection port (12) disposed on the housing (11), wherein the busway connection port (12) connects to a busway and receive a power supply;
a switch (13) disposed in the housing (11);
a first connection line (14) coupled to the busway connection port (12) and a power receiving side of the switch (13), wherein the first connection line (14) has a mutual inductance section (141) extending outside the housing (11), wherein an outermost layer of the mutual inductance section (141) is an insulating structure (15); and
a plurality of connection lines connected to the busway connection port (12) and the power receiving side of the switch (13); wherein the plurality of connection lines include a plurality of mutual inductance section (141) extending outside the housing (11), and the plurality of connection lines and the first connection line (14) may have the same or different structures.

9. The busway plug-in device (10) of claim 8, wherein the insulating structure (15) includes a plurality of microstructures (31).

10. The busway plug-in device (10) of claim 9, wherein each of the plurality of microstructures (31) is in arc-shaped.

11. The busway plug-in device (10) of claim 8, wherein the mutual inductance section (141) connects a current transformer (CT).

12. The busway plug-in device (10) of claim 11, wherein the mutual inductance section (141) includes an auxiliary latch (32) compatible for a latch structure of the current transformer (CT).
